(19) Europäisches Patentamt / European Patent Office / Office européen des brevets

(11) **EP 4 300 633 A1**

(12) **EUROPEAN PATENT APPLICATION**
published in accordance with Art. 153(4) EPC

(43) Date of publication:
**03.01.2024  Bulletin 2024/01**

(21) Application number: **22774335.8**

(22) Date of filing: **25.03.2022**

(51) International Patent Classification (IPC):
**H01M 4/58** (2010.01)        **H01M 4/525** (2010.01)
**H01M 4/505** (2010.01)       **H01M 10/0525** (2010.01)

(52) Cooperative Patent Classification (CPC):
**H01M 4/36; H01M 4/485; H01M 4/505;**
**H01M 4/525; H01M 4/58; H01M 10/0525;**
**H01M 10/058; H01M 10/44**

(86) International application number:
**PCT/CN2022/082943**

(87) International publication number:
**WO 2022/199681 (29.09.2022 Gazette 2022/39)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **25.03.2021  CN 202110320984**

(71) Applicant: **BYD Company Limited**
**Shenzhen, Guangdong 518118 (CN)**

(72) Inventors:
• **CHEN, Na**
  **Shenzhen, Guangdong 518118 (CN)**
• **DENG, Xuanwei**
  **Shenzhen, Guangdong 518118 (CN)**
• **PAN, Yi**
  **Shenzhen, Guangdong 518118 (CN)**

(74) Representative: **Arnold & Siedsma**
**Bezuidenhoutseweg 57**
**2594 AC The Hague (NL)**

(54) **LITHIUM-ION BATTERY AND MOTORIZED VEHICLE**

(57)    A lithium ion battery and a powered vehicle are disclosed. The lithium ion battery includes a positive electrode plate, a negative electrode plate, an electrolyte and a separator. The positive electrode plate includes a positive electrode current collector and a positive electrode material layer provided on the positive electrode current collector. The negative electrode plate includes a negative electrode current collector and a negative electrode material layer provided on the negative electrode current collector. The negative electrode active material in the negative electrode material layer is graphite. The positive electrode material layer includes a positive electrode active material consisting of a lithium manganese iron phosphate material, a lithium iron phosphate material and a ternary material. In the positive electrode active material, the mass ratio of the lithium manganese iron phosphate material, the lithium iron phosphate material and the ternary material are $A_1$, $A_2$ and $A_3$ respectively, and $A_1+A_2+A_3=1$. It is defined that $\alpha = (M_4 \times \eta_4 \times Y)/[(M_1 \times \eta_1 \times A_1+M_2 \times \eta_2 \times A_2+M_3 \times \eta_3 \times A_3) \times X]$, $\beta=[M_1 \times (1-\eta_1) \times A_1+M_2 \times (1-\eta_2) \times A_2+M_3 \times (1-\eta_3) \times A_3] \times X/[M_4 \times (1-\eta_4) \times Y]$, and the following conditions are satisfied: $1.03 \leq \alpha \leq 1.15$, and $0.55 \leq \beta \leq 1.5$, where X is the coating amount of the positive electrode active material on the positive electrode plate, and Y is the coating amount of graphite on the negative electrode plate; the units of $M_1$, $M_2$, $M_3$, and $M_4$ are all mAh/g; and the units of X and Y are g.

Processed by Luminess, 75001 PARIS (FR)

**Description**

**CROSS-REFERENCE TO RELATED APPLICATIONS**

The present disclosure claims priority to Chinese Patent Application No. 202110320984.1, entitled "Lithium ion battery and powered vehicle" filed with China National Intellectual Property Adminision on March 25, 2021, the entire contents of which are incorporated herein by reference.

**FIELD**

The present disclosure relates to the technical field of batteries, and specifically to a lithium ion battery and a powered vehicle.

**BACKGROUND**

Lithium ion batteries are a new generation of green high-energy batteries, widely used in electronic devices, automobiles, aerospace and other fields. As an important components of lithium ion batteries, the choice of positive electrode materials has a direct impact on the performance of lithium ion batteries. Use of a variety of positive electrode materials in mixture is one of the commonly used means in the battery field.

The existing mixtures of positive electrode materials mainly include: a mixture of a lithium iron phosphate (LFP) material and a ternary material; a mixture of a lithium manganese iron phosphate (LMFP) material and a ternary material; and a mixture of lithium manganate and a ternary material, etc. However, the first mixture has the risk of Li-Plating when the battery is charged at a high rate in a high state of charge (SOC) state, reducing the safety of the battery. The latter two mixtures can reduce the risk of Li-Plating when the battery is charged at a high rate to some extent, however, when the battery is discharged in a low SOC state, it quickly reaches the cut-off voltage and the discharge power is low. In addition, the specific capacity of a positive electrode of a lithium battery with a mixture of various positive electrode materials is low, which is not conducive to the improvement of energy density of the battery.

**SUMMARY**

In view of the above, a lithium ion battery prepared by mixing LMFP, LFP and a ternary material in a proper proportion and controlling the initial charging capacity and initial efficiency of the three materials to meet certain requirements in the present disclosure is not prone to Li-Plating when charged in a high SOC state, has higher power when discharged in a low SOC state, can take full use of the specific capacity of various materials, and has good cycling stability.

In a first aspect, the present disclosure provides a lithium ion battery, which includes a positive electrode plate, a negative electrode plate, an electrolyte, and a separator located between the positive electrode plate and the negative electrode plate. The positive electrode plate includes a positive electrode current collector and a positive electrode material layer provided on the positive electrode current collector. The negative electrode plate includes a negative electrode current collector and a negative electrode material layer provided on the negative electrode current collector. The negative electrode active material in the negative electrode material layer is graphite. The positive electrode material layer includes a positive electrode active material consisting of a lithium manganese iron phosphate material, a lithium iron phosphate material and a ternary material. The mass ratio of the lithium manganese iron phosphate material, the lithium iron phosphate material and the ternary material in the positive electrode active material are $A_1$, $A_2$, and $A_3$ based on mass, where $A_1+A_2+A_3=1$.

It is defined that $\alpha = (M_4 \times \eta_4 \times Y)/[(M_1 \times \eta_1 \times A_1+M_2 \times \eta_2 \times A_2+M_3 \times \eta_3 \times A_3) \times X]$,

$$\beta=[M_1 \times (1-\eta_1) \times A_1+M_2 \times (1-\eta_2) \times A_2+M_3 \times (1-\eta_3) \times A_3] \times X/[M_4 \times (1-\eta_4) \times Y],$$

and the following conditions are satisfied: $1.03 \leq \alpha \leq 1.15$, and $0.55 \leq \beta \leq 1.5$,
where $M_1$ and $\eta_1$ are respectively the initial charging specific capacity and the initial efficiency of the lithium manganese iron phosphate material, $M_2$ and $\eta_2$ are respectively the initial charging specific capacity and the initial efficiency of the lithium iron phosphate material, $M_3$ and $\eta_3$ are respectively the initial charging specific capacity and the initial efficiency of the ternary material, $M_4$ and $\eta_4$ are respectively the initial discharging specific capacity and the initial efficiency of graphite, X is the coating amount of the positive electrode active material on the positive electrode plate, and Y is the coating amount of graphite on the negative electrode plate; the units of $M_1$, $M_2$, $M_3$, and $M_4$ are all mAh/g; and the units of X and Y are both g.

In the present disclosure, a mixture of LMFP, LFP and a ternary material is used as a positive electrode active material, and the mixing ratios of the three materials are adjusted, and the parameters $\alpha$ and $\beta$, taking the specific capacity and initial efficiency of the positive and negative electrode active materials, and other parameters involved in the operation of the battery into account, are controlled in certain ranges. As a result, the charging and discharging characteristics of various materials are well balanced, such that the positive electrode active material has high charging and discharging plateaux in both high SOC and low SOC states. Therefore, the battery is not prone to Li-Plating when charged in a high SOC state, and has a large power when discharged in a low SOC state. Moreover, the positive electrode active material has a high compaction density, and a high specific capacity, which are beneficial to the improvement of the energy density of the lithium ion battery. Therefore, the lithium ion battery has good rate and power performances and high energy density at the same time.

In some embodiments of the present disclosure, it is also defined that $\gamma = (M_1 \times \eta_1 \times A_1 + M_2 \times \eta_2 \times A_2 + M_3 \times \eta_3 \times A_3) \times b \times c/(a \times A_3 \times 1000)$, and it is satisfied that $0.45 \leq \gamma \leq 1.55$, where a is the residual alkali content of the ternary material, b is the injection coefficient of the lithium ion battery, in g/Ah, and c is the theoretical residual water content in the electrolyte in assembled lithium ion battery; and a and c are in ppm.

In this case, the structural stability of LFP and LMFP in the positive electrode active material are improved, and the dissolution of iron/manganese is unlikely to occur, which is beneficial to the cycling performance of the battery. That is, the lithium ion battery has good rate and power performances, high energy density, good cycling performance, and high safety performance at the same time.

In some embodiments of the present disclosure, b is a constant in the range of 2.9-3.8, c is in the range of 200 ppm-400 ppm, and a is in the range of 500 ppm-1500 ppm.

In some embodiments of the present disclosure, $A_2$ is 2-5 times $A_1$.

In some embodiments of the present disclosure, $A_1$ is in the range of 10%-25%.

In some embodiments of the present disclosure, the ratio of X to Y is in the range of 1.71-1.89.

In some embodiments of the present disclosure, the ternary material has a general formula of $LiNi_xCo_yM_z$, in which M is at least a metal element selected from Group IIIB to Group VA, $0.33 \leq x \leq 0.98$, $0 < y < 1$, $0 < z < 1$, and $x + y + z = 1$.

In some embodiments of the present disclosure, the molar amount of manganese accounts for 0.75-0.9 of the total molar amount of manganese and iron in the lithium manganese iron phosphate material.

In some embodiments of the present disclosure, the lithium iron phosphate material has a particle size D50 of 0.8 $\mu$m-1.3 $\mu$m, the lithium manganese iron phosphate material has a particle size D50 of 10 $\mu$m-15 $\mu$m, and the ternary material has a particle size D50 of 4 $\mu$m-6 $\mu$m.

In a second aspect, the present disclosure provides a powered vehicle, which includes the lithium ion battery according to the first aspect of the present disclosure.

Advantages of the embodiments of the present disclosure will be partly set forth in the following description, and partly obvious from the specification, or may be learned by practice of the embodiments of the present disclosure.

## BRIEF DESCRIPTION OF THE DRAWINGS

The accompanying drawings illustrated here are provided for further understanding of the present disclosure and constitute a part of the present disclosure. The illustrative embodiments of the present disclosure and the description thereof are intended to explain the present disclosure and do not constitute an undue limitation on the present disclosure. In the accompanying drawings:

FIG. 1a shows a charging and discharging curve of a battery of a lithium manganese iron phosphate-graphite system;
FIG. 1b shows a charging and discharging curve of a battery of a lithium iron phosphate-graphite system;
FIG. 1c shows a charging and discharging curve of a battery of a ternary material-graphite system; and
FIG. 2 shows a charging and discharging curve of a full cell provided in Example 4 of the present disclosure.

## DETAILED DESCRIPTION

Exemplary embodiments of the present disclosure will be described below. It be appreciated that some improvements and modifications can be made by those skilled in the art without departing from the principles of the present invention, which are also contemplated to be within the scope of the present invention.

An embodiment of the present disclosure provides a lithium ion battery, which includes a positive electrode plate, a negative electrode plate, an electrolyte, and a separator located between the positive electrode plate and the negative electrode plate. The positive electrode plate includes a positive electrode current collector and a positive electrode material layer provided on the positive electrode current collector. The negative electrode plate includes a negative electrode current collector and a negative electrode material layer provided on the negative electrode current collector. The negative electrode active material in the negative electrode material layer is graphite. The positive electrode material layer includes a positive electrode active material consisting of a lithium manganese iron phosphate (LMFP) material, a lithium iron phosphate (LFP) material and a ternary material. The mass ratio of the lithium manganese iron phosphate material, the lithium iron phosphate material and the ternary material in the positive electrode active material are $A_1$, $A_2$, and $A_3$ based on mass, where $A_1+A_2+A_3=1$.

It is defined that $\alpha = (M_4 \text{ x } \eta_4 \text{ x } Y)/[(M_1 \times \eta_1 \times A_1+M_2 \times \eta_2 \times A_2+M_3 \times \eta_3 \text{ x } A_3) \text{ x } X]$,

$$\beta=[M_1 \text{ x } (1-\eta_1) \text{ x } A_1+M_2 \text{ x } (1-\eta_2) \text{ x } A_2+M_3 \text{ x } (1-\eta_3) \text{ x } A_3] \text{ x } X/[M_4 \text{ x } (1-\eta_4) \text{ x } Y],$$

and the following conditions are satisfied: $1.03\leq \alpha \leq 1.15$, and $0.55\leq\beta\leq1.5$,
where $M_1$ and $\eta_1$ are respectively the initial charging specific capacity and the initial efficiency of the lithium manganese iron phosphate material, $M_2$ and $\eta_2$ are respectively the initial charging specific capacity and the initial efficiency of the lithium iron phosphate material, $M_3$ and $\eta_3$ are respectively the initial charging specific capacity and the initial efficiency of the ternary material, $M_4$ and $\eta_4$ are respectively the initial discharging specific capacity and the initial efficiency of graphite, X is the coating amount of the positive electrode active material on the positive electrode plate, and Y is the coating amount of graphite on the negative electrode plate; the units of $M_1$, $M_2$, $M_3$, and $M_4$ are all mAh/g; and the units of X and Y are g.

It should be noted that: $M_1$, $M_2$, $M_3$, $M_4$, $\eta_1$, $\eta_2$, $\eta_3$, and $\eta_4$ can be respectively obtained by testing a button cell prepared with the LMFP, LFP, ternary or graphite material alone. X, and Y are parameters that are definite in the design of the battery.

$\alpha$ represents the excess ratio of the capacity of the negative electrode plate relative to the capacity of the positive electrode plate. If the value of $\alpha$ is too low, there is a risk of Li-Plating on the negative electrode plate during the charging process. If the value of $\alpha$ is too high, the coating amount on the negative electrode plate is too large, and more active lithium needs to be consumed when an SEI film (solid electrolyte interface film) is formed on the negative electrode plate, which is not conducive to the exertion of the capacity of the positive electrode active material and will reduce the energy density of the battery. By controlling $1.03\leq\alpha\leq1.15$, the risk of Li-Plating of the battery can be reduced, and the capacity of the positive electrode active material is facilitated to be exerted. In some embodiments of the present disclosure, $1.05\leq\alpha\leq1.12$. In some embodiments of the present disclosure, $1.08\leq\alpha\leq1.12$.

$\beta$ represents an equilibrium relationship in the initial efficiency of the LMFP material, the LFP material, graphite and the ternary material. The initial efficiency of the ternary material < the initial efficiency of graphite < the initial efficiency of LMFP material < the initial efficiency of LFP material. When the negative electrode is graphite and only the LFP and/or LMFP material is/are used as the positive electrode active material, irreversible lithium loss from the LFP/LMFP material is low due to high initial efficiency of the LFP/LMFP material, and insufficient for consumption by graphite to form an SEI film. Therefore, graphite will have to consume other active lithium in the battery system, reducing the specific capacity of LFP/LMFP, and causing the energy density of the battery to become low. However, because of the low initial efficiency, the more irreversible lithium left by the ternary material in the negative electrode is sufficient for consumption by the negative electrode to form an SEI film. When LFP/LMFP and ternary material are used in admixture, the ternary material acts to supplement lithium to LFP/LMFP, thus improving the specific capacity of the entire positive electrode active material. After overall consideration, $\beta$ in the present disclosure is controlled in a range of: $0.55\leq\beta\leq1.5$, which facilitates the improvement of the specific capacity of the entire positive electrode active material and the energy density of the battery.

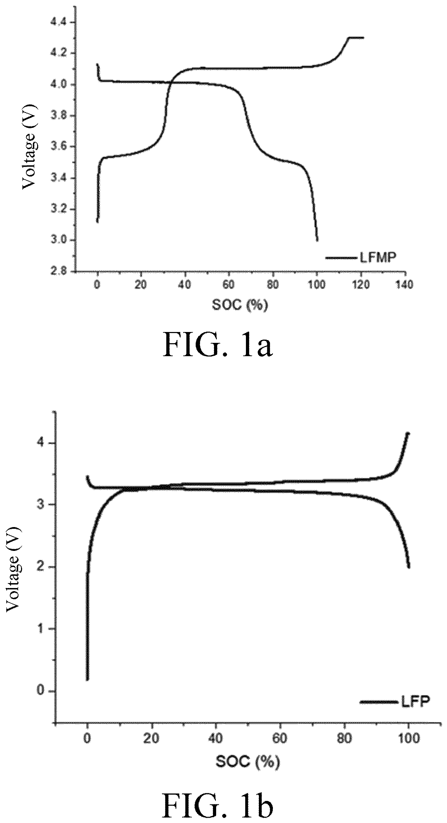

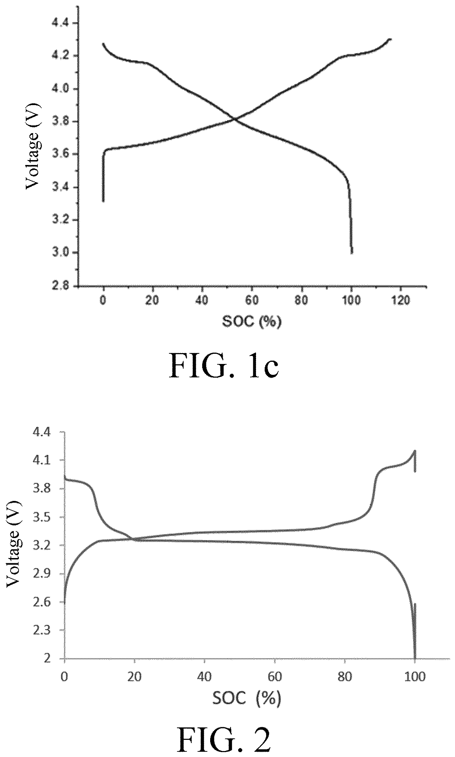

In addition, when LMFP, LFP and the ternary material are used in admixture, the different charging and discharging characteristics of the three materials can be utilized. The LMFP material has a certain length of a discharging plateau in high voltage range (the charging and discharging voltage plateau is 3.95V-4.0V as shown in FIG. 1a), which is beneficial to reducing the risk of Li-Plating when the system is charged at a high rate in a high SOC state. The LFP material has a long charging and discharging plateau (the charging and discharging voltage plateau is about 3.2 V as shown in FIG. 1b), which is beneficial to improving the high-power discharging performance in a low SOC state of the system. The capacity release of the ternary material over the entire voltage range is relatively even (as shown in 1c), and more prone to the capacity release in a high-voltage range. Therefore, the battery prepared by mixing the above three materials in a proper proportion has a charging and discharging plateau in both a high SOC state and a low SOC state (as shown in FIG. 2). In a high SOC state, LMFP and the ternary material can discharge cooperatively, the battery has a small polarization and can work at a large rate, the discharging power is large, but the actual discharging current borne by each material is small. Correspondingly, when the battery is charged at a high rate in a high SOC state, the three materials can be charged cooperatively, and the actual charging current borne by each material is small, so Li-Plating is unlikely to occur due to over charging. In a low SOC state, LFP and LMFP can be charged and discharged cooperatively, the battery has a small polarization, and the discharge power of the battery is large, which is helpful for the powered vehicle to reach a predetermined speed quickly when it is started.

Therefore, in the lithium ion battery provided in the present disclosure, LMFP, LFP and ternary material are mixed in a proper proportion and used as the positive electrode active material; and the parameters α and β in are controlled in a certain range based on the specific capacity, efficiency and others of the positive and negative electrode active materials, such that the battery has both high average voltage and high specific capacity, the energy density is improved, the risk of Li-Plating when the battery is charged in a high SOC state is reduced, and the discharging power in a low SOC state is increased.

In some embodiments of the present disclosure, it is also defined that $\gamma=(M_1 \times \eta_1 \times A_1+M_2 \times \eta_2 \times A_2+M_3 \times \eta_3 \times A_3) \times b \times c/(a \times A_3 \times 1000)$, and it is satisfied that: $0.45 \leq \gamma \leq 1.55$, where a is the residual alkali content of the ternary material, b is the injection coefficient of the lithium ion battery, in g/Ah, and c is the theoretical residual water content in the electrolyte in assembled lithium ion battery; and a and c are in ppm.

Here, the parameter a can be obtained by testing the used ternary material before the lithium ion battery is assembled. The parameter b is a parameter that is definite when the battery is designed, and c is a theoretical value. For a common battery with qualified assembly, the residual water content c in the electrolyte is usually between 200 ppm and 400 ppm. The injection coefficient b of is a ratio of the injected amount of the electrolyte in the battery to the designed discharge capacity of the battery. When the injection coefficient b is definite, and the capacity of the battery is definite, the mass of the electrolyte in the battery can be determined. Then a theoretical value (in g) of the water contained in the electrolyte can be known from c, and the amount of HF converted from water can be further determined. In some embodiments of the present disclosure, b is in the range of 2.9 g/Ah-3.8 g/Ah.

The parameter γ can represent the inhibition of HF in electrolyte in the battery. When LFP, LMFP and the ternary material are used in admixture, the ternary material can preferentially consume the residual water in the electrolyte of the battery and reduce the HF content in the electrolyte because of its good water absorption performance. When the residual alkali content on the surface of the ternary material meets a certain relationship with the HF content in the electrolyte (that is, $0.45 \leq \gamma \leq 1.55$), the HF content in the electrolyte can be greatly reduced, thereby significantly reducing the dissolution of iron from the LFP material and the dissolution of iron and manganese from the LMFP material. This is beneficial to the structural stability of the two materials, thus improving the cycling performance and cycling life of the battery. In some embodiments of the present disclosure, γ is in the range of $0.5 \leq \gamma \leq 1.45$.

In some embodiments of the present disclosure, $A_2$ is 2-5 times $A_1$. In this case, the discharging power and safety performance of the lithium ion battery under different SOC states can be guaranteed to be better. In some embodiments of the present disclosure, $A_2$ is 2.4-3.5 times $A_1$.

In some embodiments of the present disclosure, $A_1$ is in the range of 10%-25%. In some embodiments of the present disclosure, $A_1$ is in the range of 15%-25%. In some other embodiments of the present disclosure, $A_1$ is in the range of 15%-22%. In some embodiments of the present disclosure, $A_2$ is in the range of 45%-80%. In some embodiments of the present disclosure, $A_2$ is in the range of 45%-75%. In some other embodiments of the present disclosure, $A_2$ is in the range of 50%-75%. In some embodiments of the present disclosure, $A_3$ is in the range of 10%-40%. In some embodiments of the present disclosure, $A_3$ is in the range of 10%-30%. In some other embodiments of the present disclosure, $A_3$ is in the range of 10%-25%.

In some embodiments of the present disclosure, the ratio (X/Y) of X to Y is in the range of 1.71-1.89. This can not only avoid Li-Plating on the negative electrode plate in the charging process, but also facilitate the exertion of the capacity of the positive electrode active material and the improvement of the energy density of the battery. In some embodiments of the present disclosure, X/Y is 1.73, 1.82 or 1.87.

In the present disclosure, the ternary material has a general formula of $LiNi_xCo_yM_z$, in which M is at least a metal element selected from Group IIIB to Group VA, $0.33 \leq x \leq 0.98$, $0<y<1$, $0<z<1$, and $x+y+z=1$. For example, M is at least one of Mn, Al, Zr, Ti, Y, Sr and W. In some embodiments of the present disclosure, y meets $0.01 \leq y \leq 0.33$, and z meets $0.01 \leq z \leq 0.33$.

In some embodiments of the present disclosure, x is in the range of $0.70 \leq x \leq 0.98$. In addition, when the value of x is high, the ternary material can also be called "high-nickel ternary material", which has good water absorption, high specific capacity and good rate performance, and has H2-H3 phase transition and an obvious charging and discharging plateau around 4.1-4.15V, which is beneficial to the cooperative discharging of LMFP and the high-nickel ternary material. In some embodiments of the present disclosure, x is in the range of $0.80 \leq x \leq 0.90$. In some embodiments of the present disclosure, x is in the range of $0.83 \leq x \leq 0.88$.

Nickel in the ternary material is alkaline, and tends to absorb moisture and carbon dioxide when exposed to air, which react with surface lithium to generate lithium hydroxide (LiOH) and lithium carbonate (LizCOs). The residual alkali content of the ternary material specifically refers to the percentage of the mass of LiOH and $Li_2CO_3$ relative to the total mass of the ternary material determined before the battery is assembled. In some embodiments of the present disclosure, a is in the range of 500 ppm-1500 ppm.

In some embodiments of the present disclosure, the molar amount of manganese accounts for 0.75-0.9 of the total molar amount of manganese and iron in the lithium manganese iron phosphate material. That is, the lithium manganese iron phosphate has a general formula of $LiMn_kFe_{1-k}PO_4$, in which $0.75 \leq k \leq 0.9$. In this case, the molar ratio of manganese element is relatively large, such that the lithium manganese iron phosphate material has a longer charging voltage plateau at 4.05-4.1 V, which is more conducive to reducing the risk of Li-Plating when the battery is charged at a large rate in a high SOC state.

In some embodiments of the present disclosure, the particle size D50 of the ternary material is 4 μm-6 μm, for example, 4 μm-5 μm. In some embodiments of the present disclosure, the ternary material is a quasi-single crystal material, having a structural stability higher than that of the agglomerated ternary material.

In some embodiments of the present disclosure, the particle size D50 of the lithium iron phosphate material is 0.8 μm-1.3 μm, for example, 0.8 μm-1.2 μm.

In some embodiments of the present disclosure, the particle size D50 of the lithium manganese iron phosphate material ranges from 10 mm to 15 mm.

Further, the surface of the lithium iron phosphate or lithium iron phosphate material also has a carbon coating to improve the conductivity. Further, the carbon content in the lithium iron phosphate or lithium iron phosphate material is 0.8wt%-1.2wt%.

The positive electrode material layer and the negative electrode material layer further include a conductive agent and a binder. For example, the positive electrode material layer can be obtained by coating a positive electrode slurry containing the positive electrode active material, the conductive agent, the binder, and a solvent, and drying. When the positive electrode slurry is prepared, the binder and the solvent is mixed, and stirred fully; then the conductive agent is added and stirred; and then the positive electrode active material is added, stirred, and sieved. The added positive electrode active material can be directly a mixture of the above-mentioned LMFP, LFP and ternary material, or these three materials added in batches.

In some embodiments of the present disclosure, the percentage by mass of the positive electrode active material in the positive electrode material layer is 95%-97%. In some embodiments of the present disclosure, the percentage by mass of the graphite in the negative electrode material layer is 95%-98%.

In some embodiments of the present disclosure, the positive electrode active material allows the maximum compacted density of the positive electrode plate to fall in the range of 2.7 $g/cm^3$-2.8 $g/cm^3$.

The conductive agent and binder are conventional choices in the battery field. For example, the conductive agent can be, without limitation, at least one of carbon nanotubes, carbon fibers, carbon black (such as acetylene black, Cochin black), furnace black and graphene. In some embodiments of the present disclosure, the conductive agent includes all three types of the carbon nanotubes, carbon black and graphene, and the conductive agents of three dimensions can make the positive electrode material layer have better conductivity. Further, the mass ratio of carbon nanotubes, carbon black and graphene can be 6: 5: 2.

The binder can be one or more selected from polyvinylidene fluoride (PVDF), polytetrafluoroethylene (PTFE), polyvinyl alcohol (PVA), styrene-butadiene rubber (SBR), polyacrylonitrile (PAN), polyimide (PI), polyacrylic acid (PAA), polyacrylate, polyalkene (such as polyethylene, polypropylene, and polystyrene), sodium carboxymethyl cellulose (CMC) and sodium alginate. PVDF can be a copolymer obtained by copolymerization of vinylidene fluoride with an alkene compound containing a polar group including at least one of carboxyl group, epoxy group, hydroxyl group and sulfonic acid group. The existence of the polar group can enhance the peeling strength between the positive electrode material layer or the negative electrode material layer and the current collector.

The positive electrode current collector and the negative electrode current collector can be independently selected from a metal foil or an alloy foil. The metal foil includes a copper, titanium, aluminum, platinum, iridium, ruthenium, nickel, tungsten, tantalum, gold or silver foil, and the alloy foil includes stainless steel, or an alloy of at least one element selected from copper, titanium, aluminum, platinum, iridium, ruthenium, nickel, tungsten, tantalum, gold and silver.

In some embodiments of the present disclosure, the alloy foil is mainly composed of the above elements. The metal foil may further contain a doping element including, but not limited to, one or more of platinum, ruthenium, iron, cobalt, gold, copper, zinc, aluminum, magnesium, palladium, rhodium, silver and tungsten. The positive electrode current collector and the negative electrode current collector can be etched or roughened to form a secondary structure, to facilitate the effective contact with the electrode material layer. Generally, the positive electrode current collector is often an aluminum foil, and the negative electrode current collector is often a copper foil.

The present disclosure further provides a powered vehicle including the lithium ion battery. Due to the use of the lithium ion battery, the powered vehicle can be rapidly fully charged when charged on a charging pile and can quickly reach a higher starting speed when started, and the battery has long battery life and high safety.

The embodiments of the present disclosure will be further described below with reference to specific examples.

The LMFP material used in the embodiments of the present disclosure is $LiMn_{0.8}Fe_{0.2}PO_4$, having a particle size D50 of 10-15 μm, an initial charging specific capacity $M_1$ of 160 mAh/g, and initial efficiency $\eta_1$ of 96%. The LFP material used has a particle size D50 of 0.8-1.2 μm, an initial charging specific capacity $M_2$ of 162 mAh/g, and an initial efficiency $\eta_2$ of 99%. The ternary material is a high-nickel ternary quasi-single crystal material, having a general formula of $LiNi_{083}Co_{0.12}Mn_{0.05}$, a particle size D50 of 4-5 μm, an initial charging specific capacity $M_3$ of 238 mAh/g, an initial efficiency $\eta_3$ of 86%, and a residual alkali content a of 700 ppm. The graphite has an initial discharging specific capacity

$M_4$ of 355 mAh/g, and an initial efficiency $\eta_4$ of 95%. The injection coefficient b of the battery to be assembled is 3.1 g/Ah, and the theoretical value of residual water content c in the electrolyte after the battery is assembled is designed to be 200 ppm.

**Preparation of positive electrode active material:**

The LMFP material, the LFP material, and the ternary material were mixed according to mixing proportions $A_1$, $A_2$, and $A_3$ provided in Table 1 respectively, to obtain the positive electrode active materials of various examples. The ratio of the coating amount X of the positive electrode active material on the positive electrode plate to the coating amount Y of graphite on the negative electrode plate was controlled according to Table 1. The parameters $\gamma$, $\alpha$, and $\beta$ were determined according to the formulas above. Corresponding test parameters are summarized in Table 1.

In addition, in order to highlight the beneficial effects of the technical solution of the present disclosure, comparative examples 1-4 shown in Table 1 below are also provided.

Table 1. Some parameters of various examples and comparative examples

| Test No. | X/Y | Mixing ratio (%) A1: A2: A3 | $\alpha$ | $\beta$ | Y |
|---|---|---|---|---|---|
| Example 1 | 1.87 | 21: 60: 19 | 1.08 | 0.91 | 0.78 |
| Example 2 | 1.87 | 17: 65: 18 | 1.08 | 0.86 | 0.82 |
| Example 3 | 1.87 | 19: 67: 14 | 1.09 | 0.73 | 1.05 |
| Example 4 | 1.82 | 22: 65: 13 | 1.13 | 0.70 | 1.12 |
| Example 5 | 1.82 | 15: 75: 10 | 1.13 | 0.56 | 1.45 |
| Example 6 | 1.82 | 20: 70: 10 | 1.13 | 0.59 | 1.45 |
| Example 7 | 1.73 | 20: 51: 29 | 1.13 | 1.15 | 0.52 |
| Example 8 | 1.73 | 15: 62: 23 | 1.15 | 0.94 | 0.65 |
| Example 9 | 1.73 | 15: 60: 25 | 1.14 | 1.00 | 0.60 |
| Example 10 | 1.73 | 21: 56: 23 | 1.15 | 0.97 | 0.65 |
| Example 11 | 1.73 | 15: 45: 40 | 1.10 | 1.46 | 0.39 |
| Comparative Example 1 | 1.73 | 0: 35: 65 | 1.03 | 2.17 | 0.26 |
| Comparative Example 2 | 1.73 | 35: 0: 65 | 1.04 | 2.33 | 0.25 |
| Comparative Example 3 | 1.73 | 65: 35: 0 | 1.25 | 0.46 | / |
| Comparative Example 4 | 1.73 | 10: 20: 70 | 1.02 | 2.37 | 0.24 |

**Preparation of positive electrode plate:** The organic solvent NMP and the binder PVDF were added into a blender, and stirred for 1 hr. Then a conductive agent (specifically a mixture of carbon nanotubes, carbon black and graphene at a mass ratio of 6:5:2), and stirred for 30 min. Then the positive electrode active material of each example or comparative example was added, stirred for 3 hrs, and sieved, to obtain the positive electrode slurry of each example and comparative example. The mixing ratio of the positive electrode active material, the conductive agent, the binder PVDF and the organic solvent NMP in the positive electrode slurry was 100:2:2:30.

The positive electrode slurry of each example and comparative example were coated on two side surfaces of an aluminum foil, and baked at a high temperature to remove NMP, to form a positive electrode material layer on the aluminum foil. The positive electrode material layer was rolled and cut, to obtain a double-sided positive electrode plate with an areal density of 4.0 g/dm$^2$ of two side surfaces. According to the areal density and thickness of the double-sided electrode plate, the compacted density of the electrode plate was calculated. The results are summarized in Table 2.

Similarly, the positive electrode slurry of each example and comparative example were coated on one side surface of an aluminum foil, and baked at a high temperature to remove NMP, to form a positive electrode material layer on the aluminum foil. The system was rolled and cut, to obtain a single-sided positive electrode plate with an areal density of 2.0 g/dm$^2$ of one side surface.

**Preparation of negative electrode plate:** The graphite, the electrically conductive carbon black Supper P, the binder SBR, the binder CMC, and water were mixed at a mass ratio of 100: 1.0: 2.5: 1.1: 105, to obtain a negative electrode slurry. The negative electrode slurry was coated on two side surfaces of a copper foil, and baked at a high temperature to remove water, to form a negative electrode material layer. The system was rolled, and cut, to obtain a double-sided negative electrode plate with an areal density of 2.1 $g/dm^2$ and a compacted density of 1.60 $g/cm^3$.

**Assembly of battery:** The double-sided positive electrode plate of each example and comparative example, the double-sided negative electrode plate with an areal density of 2.1 $g/dm^2$ and a PP membrane as a separator were assembled into a 053450 full cell.

The single-sided positive electrode plate of each example and comparative example, a metal lithium sheet as a negative electrode, a Celgard 2300 microporous membrane as a separator, and a 1.0 mol/L $LiPF_6$ solution in ethylene carbonate (EC): dimethyl carbonate (DMC)=1:1-5 (volume ratio) as an electrolyte, were assembled into a CR2025 button cell in a glove box.

To strongly support the beneficial effects of the present disclosure, the trigger temperature of thermal runaway of the positive electrode material of the button battery of each example and comparative example was tested; and the capacity retention rate and the contents of Fe and Mn dissolved out at the negative electrode of the full cell of each example and comparative example after 2000 cycles at 45°C were tested. The results are summarized in Table 2.

**Test method for trigger temperature of thermal runaway of the positive electrode material:** The button cell of each example and comparative example was firstly fully charged (specifically by: charging at a constant current of 0.1C until the cutoff voltage was 4.2 V, and then charging at a constant voltage of 4.2 V until the cutoff current was 0.05C), so that the positive electrode plate was in a completely lithium-deintercalated state. Then the button cell was disassembled and the positive electrode plate was removed. The positive electrode material on the positive electrode plate and the electrolyte were mixed at a certain mass ratio, then placed in a high-temperature crucible, and heated at a ramping rate of 5°C/min. The thermogram was tested by differential scanning calorimeter (DSC) to observe the trigger temperature of thermal runaway of the positive electrode material.

**Test method for capacity retention rate after 2000 cycles at 45°C:** At 45°C, the full cell of each example and comparative example were charged to a voltage of 4.1 V at a constant current of 1C, and then charged at a constant voltage of 4.1 V, until the cutoff current was 0.05C. Then, the cell was discharged at a constant current of 1C until the voltage was 2.5 V. Following the above process, 2000 cycles of charging and discharging were performed. The ratio of discharging capacity of the battery in the 2000th cycle to the discharge capacity in the first cycle was calculated. The ratio was taken as the capacity retention rate after 2000 cycles.

**Test method for charging and discharging power characteristics in various SOC states:**

1. The full cell of each example and comparative example was charged to 4.2 V at a constant current of 0.2C and allowed to stand for 5 min; and then discharged to 2.5 V at a constant current of 0.2C and allowed to stand for 5 min. 2 cycles of charging and discharging were performed. The discharging capacity in the 2nd cycle was recorded as Co, and SOC was adjusted according to the capacity.

2. Each full cell was charged to 4.2 V at a constant current of 0.2C, and allowed to stand for 30 min; and then discharged to a designated SOC at a constant current of 0.2C (specifically 20% of the SOC of the full cell when charged to 4.2 V at a constant current of 0.2C), and then discharged at various discharging currents.

1) The battery was discharged for 30 s at a constant current of 0.5C and allowed to stand for 5 min. Then the discharging cutoff voltage was recorded. Next, the battery was charged for 75 s at a constant current of 0.2C, and allowed to stand for 5 min, to adjust SOC back to 20%.

2) The battery was discharged for 30 s at a constant current of 1C and allowed to stand for 5 min. Then the discharging cutoff voltage was recorded. Next, the battery was charged for 150 s at a constant current of 0.2C, and allowed to stand for 5 min, to adjust SOC back to 20%.

3) The battery was discharged for 30 s at a constant current of 2C and allowed to stand for 5 min. Then the discharging cutoff voltage was recorded. Next, the battery was charged for 300 s at a constant current of 0.2C, and allowed to stand for 5 min, to adjust SOC back to 20%.

4) The battery was discharged for 30 s at a constant current of 3C and allowed to stand for 5 min. Then the discharging cutoff voltage was recorded. Next, the battery was charged for 450 s at a constant current of 0.2C, and allowed to stand for 5 min, to adjust SOC back to 20%.

5) The battery was discharged for 30 s at a constant current of 5C and allowed to stand for 5 min. Then the discharging cutoff voltage was recorded. Next, the battery was charged for 750 s at a constant current of 0.2C, and allowed to stand for 5 min, to adjust SOC back to 20%.

6) The battery was discharged for 30 s at a constant current of 7C and allowed to stand for 5 min. Then the discharging cutoff voltage was recorded. Next, the battery was charged for 1050 s at a constant current of 0.2C, and allowed to stand for 5 min, to adjust SOC back to 20%.

7) The battery was discharged for 30 s at a constant current of 10C and allowed to stand for 5 min. Then the discharging cutoff voltage was recorded. Next, the battery was charged for 1500 s at a constant current of 0.2C, and allowed to stand for 5 min, to adjust SOC back to 20%.

According to the above 7 groups of test data, the relationship between the discharging cutoff voltage and the discharging current was fitted. Then, according to the set discharging cutoff voltage Vo (specifically 2.5 V) of the battery, the current $I_0$ required for discharging to the set cutoff voltage Vo in a certain discharging time was calculated, and the discharging peak power was $P_0 = V_0 * I_0$.

3. At room temperature, each full cell was discharged to 2.5 V at a constant current of 0.2C, and allowed to stand for 30 min; and then charged to a designated SOC at a constant current of 0.2C (specifically 80% of the SOC of the full cell when discharged to 2.5 V at a constant current of 0.2C) and then charged at various charging currents.

1) The battery was charged for 30 s at a constant current of 0.5C, and allowed to stand for 5 min. Then the charging cutoff voltage was recorded. Next, the battery was discharged for 75s at a constant current of 0.2C and allowed to stand for 5min, to adjust SOC back to 80%;

2) The battery was charged for 30 s at a constant current of 1C, and allowed to stand for 5 min. Then the charging cutoff voltage was recorded. Next, the battery was discharged for 150s at a constant current of 0.2C and allowed to stand for 5min, to adjust SOC back to 80%;

3) The battery was charged for 30 s at a constant current of 2C, and allowed to stand for 5 min. Then the charging cutoff voltage was recorded. Next, the battery was discharged for 300s at a constant current of 0.2C and allowed to stand for 5min, to adjust SOC back to 80%;

4) The battery was charged for 30 s at a constant current of 3C, and allowed to stand for 5 min. Then the charging cutoff voltage was recorded. Next, the battery was discharged for 450s at a constant current of 0.2C and allowed to stand for 5min, to adjust SOC back to 80%;

5) The battery was charged for 30 s at a constant current of 5C, and allowed to stand for 5 min. Then the charging cutoff voltage was recorded. Next, the battery was discharged for 750s at a constant current of 0.2C and allowed to stand for 5min, to adjust SOC back to 80%;

According to the above 5 groups of test data, the relationship between the charging cutoff voltage and the charging current was fitted. Then, according to the set charging cutoff voltage $V_0'$ (specifically 4.2 V) of the battery, the current $I_0'$ required for charging to the set cutoff voltage Vo' in a certain charging time was calculated, and the charging peak power was $P_0' = V_0' * I_0'$.

In addition, it is to be noted that the test methods for $M_1$ and $\eta_1$ of the LMFP material was as follows. A LMFP positive electrode plate (the positive electrode active material contains only LMFP) with an areal density of 2.0 $g/dm^2$ of one side surface and a compacted density of about 2.5 $g/cm^3$ was prepared as described above. The LMFP positive electrode plate, a metal lithium sheet, a separator, and an amount of an electrolyte were assembled into a CR2025 button cell in a glove box. The button cell was allowed to stand for about 4 hrs, so that the electrode plate was fully infiltrated in the electrolyte. The button cell was charged to a voltage of 4.3 V at a constant current of 0.1C and then to a cutoff current of 0.01C at a constant voltage of 4.3V, and then discharged to a voltage of 2.0 V at a constant current of 0.1C. The ratio of the discharging capacity to the charging capacity in the first cycle was recorded as the initial efficiency $\eta_1$, and the ratio of the charging capacity in the first cycle to the mass of the LMFP active material on the electrode plate was recorded as the initial charging specific capacity $M_1$ of the LMFP material.

The test methods for $M_2$ and $\eta_2$ of the LFP material were as follows: A LFP positive electrode plate (the positive electrode active material contains only LFP) with an areal density of 2.0 $g/dm^2$ of one side surface and a compacted density of about 2.6$g/cm^3$ was prepared as described above. The LFP positive electrode plate, a metal lithium sheet, a separator, and an amount of an electrolyte were assembled into a CR2025 button cell in a glove box. The button cell was allowed to stand for about 4 hrs, so that the electrode plate was fully infiltrated in the electrolyte. The button cell was charged to a voltage of 3.8V at a constant current of 0.1C and then to a cutoff current of 0.01C at a constant voltage of 3.8V, and then discharged to a voltage of 2.0 V at a constant current of 0.1C. The ratio of the discharging capacity to the charging capacity in the first cycle was recorded as the initial efficiency $\eta_2$, and the ratio of the charging capacity in the first cycle to the mass of the LFP active material on the electrode plate was recorded as the initial charging specific capacity $M_2$ of the LFP material.

The test methods for $M_3$ and $\eta_3$ of the ternary material were as follows: A ternary material positive electrode plate with an areal density of 2.0 $g/dm^2$ of one side surface and a compacted density of about 3.5 $g/cm^3$ were prepared as described above. The positive electrode active material on the positive electrode plate contains only the ternary material $LiNi_{083}Co_{0.12}Mn_{0.05}$. The ternary material positive electrode plate, a lithium sheet, a separator, and an amount of an electrolyte were assembled into a CR2025 button cell in a glove box. The button cell was allowed to stand for about 4 hrs, so that the electrode plate was fully infiltrated in the electrolyte. The button cell was charged to a voltage of 4.3 V at a constant current of 0.1C and then to a cutoff current of 0.01C at a constant voltage of 4.3V, and then discharged to a voltage of 3.0V at a constant current of 0.1C. The ratio of the discharging capacity to the charging capacity in the first cycle was recorded as the initial efficiency $\eta_3$, and the ratio of the charging capacity in the first cycle to the mass of the active material on the electrode plate was recorded as the initial charging specific capacity $M_3$ of the high-nickel ternary material.

The test methods for $M_4$ and $\eta_4$ of graphite were as follows: A graphite electrode plate with an areal density of 1.05 g/dm$^2$ of one side surface and a compacted density of about 1.60 g/cm$^3$ was prepared as described above. The graphite electrode plate, a lithium sheet, a separator, and an amount of an electrolyte were assembled into a CR2025 button cell in a glove box. The button cell was allowed to stand for about 4 hrs, so that the electrode plate was fully infiltrated in the electrolyte. The button cell was (1) discharged to 0.005 V at a constant current of 0.1C; (2) discharged to 0.001 V at a constant current of 0.09C, 0.08C... and 0.02C; (3) allowed to stand for 15 min; (4) charged to 1.5 V at a constant current of 0.1C; and (5) allowed to stand for 15 min. The ratio of the charging capacity to the discharging capacity in the first cycle was recorded as the initial efficiency $\eta_4$, and the ratio of the discharging capacity in the first cycle to the mass of the active material on the electrode plate was recorded as the initial discharging specific capacity $M_4$ of graphite.

Table 2. Performance test results of positive electrode plates and batteries in various examples and comparative examples

| Test No. | Compacted density of positive electrode plate (g/cm$^3$) | Discharge power in 20% SOC state (W/g) | Charge power in 80% SOC state (W/g) | Capacity retention rate after 2000 cycles at 45°C (%) | Dissolution of Fe after 2000 cycles at 45°C (ppm) | Dissolution of Mn after 2000 cycles at 45°C (ppm) | Trigger temperature by DSC (°C) |
|---|---|---|---|---|---|---|---|
| Example 1 | 2.63 | 1470 | 940 | 88 | 260 | 250 | 275 |
| Example 2 | 2.68 | 1500 | 780 | 87 | 200 | 100 | 275 |
| Example 3 | 2.64 | 1550 | 750 | 87 | 200 | 100 | 275 |
| Example 4 | 2.62 | 1500 | 780 | 87 | 300 | 200 | 275 |
| Example 5 | 2.61 | 1700 | 600 | 84 | 230 | 90 | 280 |
| Example 6 | 2.62 | 1600 | 650 | 83 | 220 | 90 | 280 |
| Example 7 | 2.72 | 1400 | 1100 | 85 | 300 | 270 | 270 |
| Example 8 | 2.68 | 1500 | 800 | 88 | 180 | 80 | 275 |
| Example 9 | 2.65 | 1450 | 950 | 87 | 165 | 100 | 270 |
| Example 10 | 2.71 | 1400 | 980 | 86 | 320 | 350 | 270 |
| Example 11 | 2.73 | 1300 | 1100 | 82 | 355 | 400 | 260 |
| Comparative Example 1 | 2.75 | 1200 | 300 | 80 | 350 | / | 250 |
| Comparative Example 2 | 2.72 | 300 | 1000 | 70 | / | 500 | 255 |
| Comparative Example 3 | 2.45 | 1200 | 800 | 60 | 500 | 600 | 279 |
| Comparative Example 4 | 2.83 | 900 | 500 | 76 | 400 | 380 | 250 |

From Table 1 and Table 2, it can be known that in Comparative Example 1 where LFP is mixed with the ternary material and no LMFP is involved, the charging power in a high SOC state is low and only 300 W/g. The content of the ternary material is too high, and reaches 65%. The safety performance of the battery is greatly reduced, and the trigger temperature of thermal runaway drops to 250°C. Moreover, the cycling performance of the battery also decreases.

In Comparative Example 2 where LMFP is mixed with the ternary material and no LFP is involved, the discharging power in a low SOC state is low and only 300 W/g. The content of the ternary material is too high, and the problems in Comparative Example 1 occur. Moreover, the cycling performance of LMFP is worse than that of the LFP material, and the capacity retention rate of the full cell in Comparative Example 2 after 2000 cycles at 45°C is lower than that of the full cell in Comparative Example 1, and is only 70%.

In Comparative example 3, LMFP and LFP materials are mixed, and no ternary material is involved. Due to the lack of the ternary material to inhibit the existence of HF in the electrolyte and further inhibit the dissolution of Mn and Fe, the cycling performance of the battery in Comparative Example 3 is the worst, and the capacity retention rate of the battery after 2000 cycles at 45°C is as low as 60%.

In Comparative example 4, although a mixture of three positive electrode active materials is used, the mixing ratio is not within the range of $1.03 \leq \alpha \leq 1.15$ and $0.55 \leq \beta \leq 1.5$ required in the present disclosure. The battery in Comparative Example 4 has a low charging power in a high SOC state and a low discharging power in a low SOC state. Due to the excessive ternary material added, the safety performance and cycling performance decrease to varying degrees.

It can be known from Table 2 that in the positive electrode active material formed by mixing the LMFP material, the LFP material, and the ternary material at such a mixing ratio that $\alpha$ is in the range of 1.03-1.15 and $\beta$ is in the range of 0.55-1.5, the discharge power of the battery in a low SOC state and the charge power in a high SOC state are large. The discharge power in a low SOC state can be up to 1400 W/g or higher, and the charge power in a high SOC can be up to 600 W/g or higher. The compacted density of the positive electrode plate is high, the structural stability of the positive electrode material is high, and the battery has good cycling performance and safety. Moreover, when $\gamma$ is in the range of 0.45-1.55, the comprehensive performance of the battery is more excellent.

The above embodiments are only several embodiments of the present disclosure, which are described specifically and in detail, without limitation to the scope claimed by the present disclosure. It should be noted that those killed in the art can make various modifications and variations to the embodiments without departing from the idea of the present disclosure, and these modifications and variations should fall into the scope claimed by the present disclosure. Therefore, the protection scope of the present disclosure is defined by the appended claims.

**Claims**

1. A lithium ion battery, comprising a positive electrode plate, a negative electrode plate, an electrolyte, and a separator located between the positive electrode plate and the negative electrode plate, wherein the positive electrode plate comprises a positive electrode current collector and a positive electrode material layer provided on the positive electrode current collector; the negative electrode plate comprises a negative electrode current collector and a negative electrode material layer provided on the negative electrode current collector; the negative electrode active material in the negative electrode material layer is graphite; the positive electrode material layer comprises a positive electrode active material consisting of a lithium manganese iron phosphate material, a lithium iron phosphate material and a ternary material; and the mass ratio of the lithium manganese iron phosphate material, the lithium iron phosphate material and the ternary material in the positive electrode active material are $A_1$, $A_2$, and $A_3$ respectively, and $A_1+A_2+A_3=1$;

   it is defined that $\alpha = (M_4 \times \eta_4 \times Y)/[(M_1 \times \eta_1 \times A_1+M_2 \times \eta_2 \times A_2+M_3 \times \eta_3 \times A_3) \times X]$,

$$\beta=[M_1 \times (1-\eta_1) \times A_1+M_2 \times (1-\eta_2) \times A_2+M_3 \times (1-\eta_3) \times A_3] \times X/[M_4 \times (1-\eta_4) \times Y],$$

   and the following conditions are satisfied: $1.03 \leq \alpha \leq 1.15$, $0.55 \leq \beta \leq 1.5$,
   where $M_1$ and $\eta_1$ are respectively the initial charging specific capacity and the initial efficiency of the lithium manganese iron phosphate material, $M_2$ and $\eta_2$ are respectively the initial charging specific capacity and the initial efficiency of the lithium iron phosphate material, $M_3$ and $\eta_3$ are respectively the initial charging specific capacity and the initial efficiency of the ternary material, $M_4$ and $\eta_4$ are respectively the initial discharging specific capacity and the initial efficiency of graphite, X is the coating amount of the positive electrode active material on the positive electrode plate, and Y is the coating amount of graphite on the negative electrode plate; the units of $M_1$, $M_2$, $M_3$, and $M_4$ are all mAh/g; and the units of X and Y are g.

2. The lithium ion battery according to claim 1, wherein it is further defined that $\gamma=(M_1 \times \eta_1 \times A_1+M_2 \times \eta_2 \times A_2+M_3 \times \eta_3 \times A_3) \times b \times c/(a \times A_3 \times 1000)$, and it is satisfied that: $0.45 \leq \gamma \leq 1.55$,
   where a is the residual alkali content of the ternary material, b is the injection coefficient of the lithium ion battery, in g/Ah, and c is the theoretical residual water content in the electrolyte in assembled lithium ion battery; and a and c are in ppm.

3. The lithium ion battery according to claim 1 or 2, wherein $A_2$ is 2-5 times $A_1$.

4. The lithium ion battery according to any one of claims 1 to 3, wherein $A_1$ is in the range of 10%-25%.

5. The lithium ion battery according to any one of claims 1 to 4, wherein the ratio of X to Y is in the range of 1.71-1.89.

6. The lithium ion battery according to any one of claims 1 to 5, wherein b is a constant in the range of 2.9-3.8, c is in the range of 200 ppm-400 ppm, and a is in the range of 500 ppm-1500 ppm.

7. The lithium ion battery according to any one of claims 1 to 6, wherein the ternary material has a general formula of $LiNi_xCo_yM_z$, in which M is at least a metal element selected from Group IIIB to Group VA, $0.33 \leq x \leq 0.98$, $0 < y < 1$, $0 < z < 1$, and $x+y+z=1$.

8. The lithium ion battery according to any one of claims 1 to 7, wherein in the lithium manganese iron phosphate material, the molar amount of manganese accounts for 0.75-0.9 of the total molar amount of manganese and iron.

9. The lithium ion battery according to any one of claims 1 to 8, wherein the lithium iron phosphate material has a particle size D50 of 0.8 $\mu$m-1.3 $\mu$m, the lithium manganese iron phosphate material has a particle size D50 of 10 $\mu$m-15 $\mu$m, and the ternary material has a particle size D50 of 4 $\mu$m-6 $\mu$m.

10. A powered vehicle, comprising the lithium-ion battery according to any one of claims 1 to 9.

FIG. 1a

FIG. 1b

FIG. 1c

FIG. 2

<div align="center">**INTERNATIONAL SEARCH REPORT**</div>

| | International application No. |
|---|---|
| | **PCT/CN2022/082943** |

**A. CLASSIFICATION OF SUBJECT MATTER**

H01M 4/58(2010.01)i; H01M 4/525(2010.01)i; H01M 4/505(2010.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT: 锰铁锂, 铁锰锂, +mn?fe?po+, + fe?mn?po+, LFMP, LMFP, 磷酸铁锂, 磷酸亚铁锂, lifepo+, 三元, 层状, 镍钴锰, 镍钴铝, lithium manganese iron, lithium iron manganese, lithium iron phosphate, ternary, layered, nickel cobalt manganese, nickel cobalt aluminum

**C. DOCUMENTS CONSIDERED TO BE RELEVANT**

| Category* | Citation of document, with indication, where appropriate, of the relevant passages | Relevant to claim No. |
|---|---|---|
| A | WO 2020116160 A1 (TORAY INDUSTRIES, INC.) 11 June 2020 (2020-06-11) entire document | 1-10 |
| A | CN 105449269 A (SHENZHEN OPTIMUMNANO ENERGY CO., LTD.) 30 March 2016 (2016-03-30) entire document | 1-10 |
| A | CN 111883771 A (TIANJIN SIKELANDE TECHNOLOGY CO., LTD.) 03 November 2020 (2020-11-03) entire document | 1-10 |
| A | CN 105702919 A (QINGDAO INSTITUTE OF BIOENERGY AND BIOPROCESS TECHNOLOGY, CHINESE ACADEMY OF SCIENCES) 22 June 2016 (2016-06-22) entire document | 1-10 |
| A | JP 2014192142 A (SHIN KOBE ELECTRIC MACH CO., LTD.) 06 October 2014 (2014-10-06) entire document | 1-10 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 May 2022** | **09 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/082943**

| Patent document cited in search report | | | Publication date (day/month/year) | Patent family member(s) | | | Publication date (day/month/year) |
|---|---|---|---|---|---|---|---|
| WO | 2020116160 | A1 | 11 June 2020 | CN | 113039669 | A | 25 June 2021 |
| | | | | KR | 20210076147 | A | 23 June 2021 |
| | | | | EP | 3893296 | A1 | 13 October 2021 |
| | | | | US | 2022006076 | A1 | 06 January 2022 |
| | | | | KR | 102305491 | B1 | 27 September 2021 |
| CN | 105449269 | A | 30 March 2016 | CN | 105449269 | B | 24 July 2018 |
| CN | 111883771 | A | 03 November 2020 | None | | | |
| CN | 105702919 | A | 22 June 2016 | CN | 105702919 | B | 02 October 2018 |
| JP | 2014192142 | A | 06 October 2014 | None | | | |

Form PCT/ISA/210 (patent family annex) (January 2015)

**REFERENCES CITED IN THE DESCRIPTION**

**Patent documents cited in the description**

- CN 202110320984